# DEMANDE DE BREVET EUROPEEN

(11) **EP 1 302 836 A1**
(43) Date de publication de la demande: **16.04.2003**
(21) Numéro de dépôt: 02292432.8
(22) Date de dépôt: 03.10.2002
(51) Int. Cl.: G06F 1/00

(54) **Procédé de sécurisation par personnalisation de la mise en oeuvre d'une application informatique et les produits programmés correspondants**

(30) Priorité: 08.10.2001 FR 0112910
(71) Demandeur: Netquartz, 92737 Nanterre Cedex (FR)
(72) Inventeur: Blondel, Patrick, 78150 Le Chesnay (FR); Bunks, Carey, 75004 Paris (FR); Pavlin, Dominique, 78480 Verneuil sur Seine (FR)
(74) Mandataire: Fruchard, Guy

(57) **Abrégé**

Procédé de sécurisation par personnalisation d'une application informatique (1) comprenant des instructions exécutables, le procédé comportant les étapes d'implanter sur un ordinateur utilisateur une application modifiée dans laquelle plusieurs groupes d'instructions (4) nécessaires au fonctionnement complet de l'application sont manquants et sont remplacés par des parties de liaison (6) aptes à faire exécuter les groupes d'instructions manquants lorsque ces groupes d'instructions manquants sont installés dans un serveur distant ou dans un organe de communication implanté dans l'ordinateur utilisateur, de répartir les groupes d'instructions manquants entre l'organe de communication et le serveur distant, et d'établir un lien entre l'organe de communication et le serveur distant.

## Description

La présente invention concerne un procédé de sécurisation par personnalisation de la mise en oeuvre d'une application informatique et les produits programmes correspondants.

On sait que pour favoriser la diffusion contrôlée des applications informatiques, c'est-à-dire en diffusant les applications auprès de personnes autorisées et en empêchant les personnes non autorisées de les faire fonctionner, il est nécessaire de prévoir des mesures de sécurité associées aux applications. Ces mesures de sécurité doivent être efficaces contre les fraudeurs mais ne doivent pas présenter une contrainte trop importante pour l'utilisateur autorisé sinon celui-ci risque de se désintéresser de l'application.

A ce propos, on connaît du document US 6,009,543 un procédé d'établissement d'un lien entre un utilisateur et un éditeur, ce procédé assurant une sécurisation de la mise en oeuvre d'une application informatique et comportant à cet effet les étapes d'extraire une partie du code exécutable de l'application informatique et d'implanter cette partie sur un serveur distant, et de remplacer la partie extraite par une partie de liaison, de sorte que lors du lancement de l'application informatique équipée de la partie de liaison, un lien est assuré automatiquement avec la partie extraite implantée dans le serveur afin de faire exécuter dans le serveur les instructions correspondantes de la partie extraite et renvoyer le résultat obtenu à l'ordinateur utilisateur dans lequel est implantée l'application informatique contenant la partie de liaison.

Ainsi, en l'absence de liaison avec le serveur, il est impossible de faire fonctionner l'application et le lien fonctionnel établi entre l'ordinateur utilisateur et le serveur est personnalisé de sorte qu'il est possible lors de chaque établissement du lien entre l'ordinateur utilisateur et le serveur, de vérifier que l'utilisateur a toujours le droit d'accéder à la partie extraite implantée dans le serveur.

Afin d'augmenter la sécurité procurée par ce procédé, il est en outre proposé dans ce document de faire varier d'un utilisateur à un autre la partie de code extraite de façon à personnaliser l'application implantée sur un ordinateur distant. Cela implique toutefois d'effectuer pour chaque utilisateur une transformation du programme initial en deux programmes correspondants dont l'un est implanté sur le serveur et l'autre est implanté sur l'ordinateur utilisateur. Ceci entraîne une gestion très lourde de chaque application au niveau du serveur.

Un but de l'invention est de proposer une sécurisation par personnalisation de la mise en oeuvre d'une application tout en minimisant la charge du serveur.

En vue de la réalisation de ce but, on propose selon l'invention un procédé de sécurisation par personnalisation d'une application informatique comprenant des instructions exécutables, le procédé comportant les étapes d'implanter sur un ordinateur utilisateur une application modifiée dans laquelle plusieurs groupes d'instructions nécessaires au fonctionnement complet de l'application sont manquants et sont remplacés par des parties de liaison aptes à faire exécuter les groupes d'instructions manquants lorsque ces groupes d'instructions manquants sont installés dans un serveur distant ou dans un organe de communication implanté dans l'ordinateur utilisateur, de répartir les groupes d'instructions manquants entre l'organe de communication et le serveur distant, et d'établir un lien entre l'organe de communication et le serveur distant.

Avec une application modifiée unique il est ainsi possible de personnaliser l'application mise à la disposition d'un utilisateur en faisant varier la répartition des groupes d'instructions manquants, tout en limitant le débit des données échangées avec le serveur en raison du nombre limité de groupes d'instructions manquants qui restent implantés sur le serveur.

L'invention concerne également les produits programmes correspondants, c'est-à-dire d'une part le produit programme destiné à être implanté sur un ordinateur utilisateur et le produit programme destiné à être implanté sur un serveur.

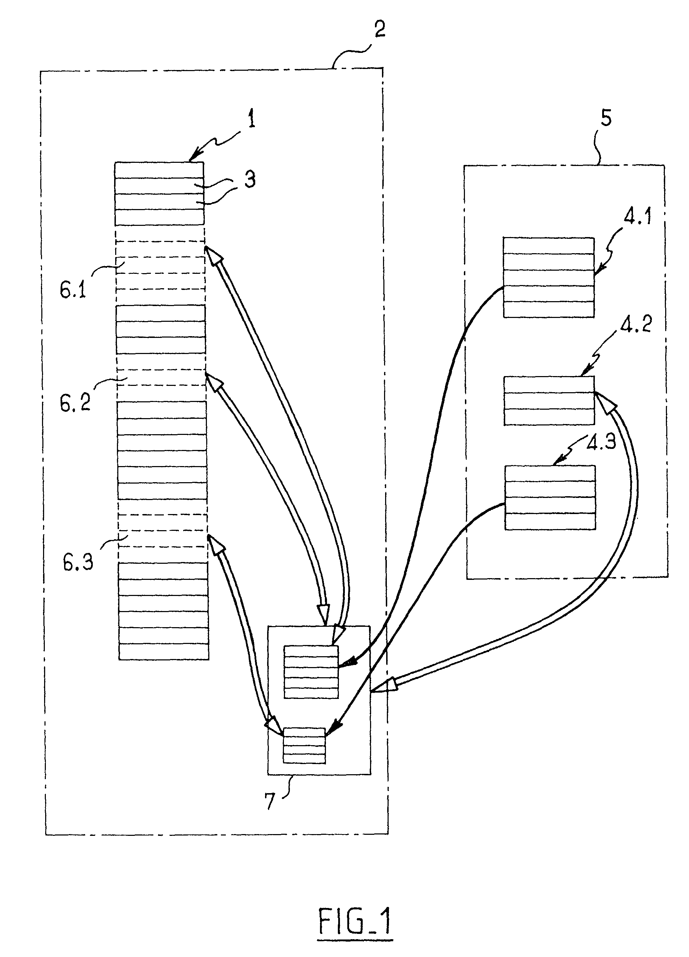

D'autres caractéristiques et avantages de l'invention apparaîtront à la lecture de la description qui suit d'un mode de mise en oeuvre particulier non limitatif, en référence à la figure unique ci-jointe qui est une illustration schématique du procédé et des produits programmes selon l'invention.

En référence à la figure, l'application informatique 1 est implantée sur un ordinateur utilisateur 2 et comporte une série d'instructions exécutables 3 dont seulement un très petit nombre a été représenté sur la figure pour ne pas surcharger celle-ci. Dans le mode de mise en oeuvre illustré, trois groupes d'instructions exécutables portant la référence numérique générale 4 et les références numériques particulières 4.1, 4.2 et 4.3 ont été extraits pour être initialement implantés sur un serveur 5. Les groupes d'instructions extraits, lesquels sont donc des groupes d'instructions manquants dans l'application informatique installée sur l'ordinateur utilisateur 2, ont été représentés en pointillés dans le bloc illustrant l'application dans l'ordinateur utilisateur 2 et sont remplacés dans l'application informatique par des parties de liaison portant la référence générale 6 et les références particulières 6.1, 6.2 et 6.3 correspondant respectivement aux groupes d'instructions extraits 4.1, 4.2 et 4.3.

L'application informatique ainsi modifiée peut être fournie sous forme de produit programme par exemple stocké sur un CD-ROM pour être implantée par un utilisateur sur l'ordinateur 2.

Les parties de liaison 6 comportent des moyens permettant d'assurer une liaison locale avec un organe de communication 7 adapté à recevoir des groupes d'instructions extraits 4 et exécuter ceux-ci localement en relation avec les parties de liaison 6 correspondantes. L'organe de communication 7 et le serveur 5 comportent en outre des moyens pour établir un lien entre eux afin d'exécuter dans le serveur les groupes d'instructions manquants qui sont implantés dans le serveur.

Lors du premier lancement de l'application 1 modifiée comme décrit ci-dessus le lien établi avec le serveur 5 sert tout d'abord à télécharger un nombre prédéterminé de groupes d'instructions 4 dans l'organe de communication 7. Dans l'exemple illustré les groupes d'instructions 4.1 et 4.3 sont ainsi téléchargés comme illustré par les flèches en trait épais. Les groupes d'instructions 4 devant être téléchargés sont sélectionnés dans le serveur. De préférence la sélection des groupes installés dans l'organe de communication est effectuée pour que la probabilité que deux utilisateurs aient une même distribution locale de blocs élémentaires soit minimisée. Par exemple la première sélection est effectuée au hasard parmi les distributions possibles et la distribution transmise est ensuite mémorisée lors de chaque sélection et éliminée des distributions pouvant être sélectionnées jusqu'à ce que toutes les distributions aient été transmises à différents utilisateurs. Toutes les possibilités de distribution sont alors réinitialisées et le même procédé est à nouveau mis en oeuvre.

Lors du fonctionnement de l'application les parties de liaison 6.1 et 6.3 sont reliées aux groupes d'instructions 4.1 et 4.3 pour faire exécuter ceux-ci localement comme indiqué par les flèches en trait double. Le lien établi avec le serveur 5 sert donc à faire exécuter uniquement le groupe d'instructions 4.2 comme également indiqué par des flèches en trait double. On remarquera que ce mode de mise en oeuvre permet de ramener les groupes d'instructions 4.1 et 4.3 sous forme de simples fichiers exécutables sans qu'il soit nécessaire de reconfigurer l'application, seul l'organe de communication 7 devant être paramétré pour déterminer lors du fonctionnement ultérieur celles des données provenant des parties de liaison 6 qui doivent être traitées localement et celles qui doivent être transmises au serveur 5. Du point de vue de l'application tous les groupes d'instructions manquants apparaissent comme des groupes d'instructions déportés, que ce soit localement (groupes d'instructions 4.1 et 4.3) ou à distance (groupe d'instructions 4.2). Bien entendu l'accès au serveur est effectué sous contrôle des droits de l'utilisateur. Le produit programme correspondant comprendra l'application modifiée ainsi que les moyens d'installation de l'organe de communication. Afin de permettre la mise en oeuvre de ce procédé le serveur 5 est chargé avec un produit programme comportant des moyens pour provoquer une mémorisation de groupes d'instructions exécutables, des moyens pour sélectionner des groupes d'instructions et pour transférer les groupes d'instructions sélectionnés à un ordinateur distant, et des moyens pour exécuter dans le serveur les groupes d'instructions restant sur demande de l'ordinateur distant.

On notera que l'invention a été illustrée en prévoyant seulement trois groupes d'instructions extraits afin de ne pas surcharger le dessin. En pratique, le procédé selon l'invention sera de préférence mis en oeuvre avec un nombre beaucoup plus important de groupes d'instructions extraits et plusieurs groupe d'instructions extraits seront maintenus déportés sur le serveur. A titre indicatif pour vingt groupes d'instructions extraits, dix d'entre eux étant maintenus sur le serveur, on obtient une personnalisation selon plus de 180 000 combinaisons différentes.

Bien entendu, l'invention n'est pas limitée au mode de mise en oeuvre décrit et est susceptible de variantes de réalisation qui apparaîtront à l'homme de métier sans sortir du cadre de l'invention tel que défini par les revendications.

En particulier, bien que la sélection des groupes d'instructions extraits et leur remplacement par des parties de liaison correspondantes aient été décrits en relation avec une première mise en service de l'application informatique, on peut également prévoir de modifier la configuration de l'application informatique lors d'un lancement ultérieur à l'installation afin de modifier la combinaison des groupes d'instructions maintenus sur le serveur. Les observations effectuées antérieurement par un utilisateur de mauvaise foi en vue de reconstituer les groupes d'instructions distants deviennent alors totalement inutilisables.

Bien que l'organe de communication 7 ait été illustré sous forme d'un seul bloc dans lequel sont implantés les groupes d'instructions finalement réinstallés dans l'ordinateur utilisateur, on peut réaliser l'organe de communication 7 en plusieurs parties, par exemple un module de communication proprement dit et une base de donnée organisée de façon sensiblement analogue au serveur de sorte que du point de vue du module de communication l'accès aux différents groupes d'instructions extraits soit sensiblement le même, la seule différence étant alors l'exécution locale ou distante.

## Revendications

1. Procédé de sécurisation par personnalisation d'une application informatique (1) comprenant des instructions exécutables, **caractérisé en ce qu'**il comporte les étapes d'implanter sur un ordinateur utilisateur une application modifiée dans laquelle plusieurs groupes d'instructions (4) nécessaires au fonctionnement complet de l'application sont manquants et sont remplacés par des parties de liaison (6) aptes à faire exécuter les groupes d'instructions manquants lorsque ces groupes d'instructions manquants sont installés dans un serveur distant ou dans un organe de communication implanté dans l'ordinateur utilisateur, de répartir les groupes d'instructions manquants entre l'organe de communication et le serveur distant, et d'établir un lien entre l'organe de communication et le serveur distant.

2. Procédé de sécurisation selon la revendication 1, **caractérisé en ce que** les groupes d'instructions manquants sont initialement implantés dans le serveur distant et **en ce qu'**au moins un groupe d'instructions manquant est sélectionné lors d'un lancement de l'application modifiée et est chargé dans l'organe de communication.

3. Procédé de sécurisation selon la revendication 2, **caractérisé en ce que** la sélection des groupes d'instructions installés dans l'organe de communication est effectuée pour que la probabilité que deux utilisateurs aient une même distribution locale de blocs élémentaires soit minimisée.

4. Procédé de sécurisation selon la revendication 1, **caractérisé en ce que** la répartition des groupes d'instructions manquants entre l'organe de communication et le serveur est modifiée lors de lancements successifs de l'application.

5. Produit programme stocké sur un moyen de stockage lisible par un ordinateur, ce produit programme comportant une application informatique comprenant des instructions exécutables, dans lequel plusieurs groupes d'instructions (4) nécessaires au fonctionnement complet de l'application informatique sont manquants et sont remplacés par des parties de liaison (6) aptes à faire exécuter les groupes d'instructions manquants, **caractérisé en ce que** le produit programme comporte en outre des moyens pour implanter un organe de communication associé à l'application, cet organe de communication étant adapté à recevoir et faire exécuter au moins un groupe d'instructions manquant (4.1, 4.3), et à établir un lien avec un serveur (5).

6. Produit programme stocké sur un moyen de stockage lisible par un ordinateur (5), **caractérisé en ce qu'**il comporte des moyens pour provoquer une mémorisation de groupes d'instructions exécutables, des moyens pour sélectionner au moins un groupe d'instructions (4.1, 4.3) selon une distribution locale et pour transférer les groupes d'instructions sélectionnés à un ordinateur distant (2), et des moyens pour exécuter les groupes d'instructions (4.2) restant sur demande de l'ordinateur distant (2).

7. Produit programme selon la revendication 6, **caractérisé en ce que** la sélection des groupes d'instructions selon la distribution locale est effectuée pour que la probabilité que deux utilisateurs aient une même distribution locale de blocs élémentaires soit minimisée.
